# EUROPÄISCHE PATENTANMELDUNG

(11) **EP 0 624 995 A1**
(43) Veröffentlichungstag der Anmeldung: **17.11.1994**
(21) Anmeldenummer: 94107117.7
(22) Anmeldetag: 06.05.1994
(51) Int. Cl.: H04Q 7/04

(54) **Schnittstellenanordnung für den Anschluss von Basisstationen an eine Nebenstellenanlage**

(30) Priorität: 11.05.1993 DE 4315621
(71) Anmelder: Alcatel SEL Aktiengesellschaft, D-70435 Stuttgart (DE)
(72) Erfinder: Veloso, Artur, D-73035 Göppingen (DE); Geywitz, Klaus, D-70839 Gerlingen (DE); Endler, Joachim, D-70435 Stuttgart (DE); Adolphi, Hans-Joachim, D-70619 Stuttgart (DE)
(74) Vertreter: Müller, Joachim

(57) **Zusammenfassung**

Um auch bei Fernsprechnebenstellenanlagen die Möglichkeit der Mobilkommunikation zu bieten, ist es bekannt, Nebenstellenanlagen mit einem Vermittlungssubsystem oder mit einer Steuereinheit für das Funknetz zu ergänzen und daran Basisstationen anzuschließen, über die schnurlose Telefone zu der Nebenstellenanlage Zugriff haben. Aufgabe der Erfindung ist es, eine Schnittstellenanordnung zwischen Nebenstellenanlage und Basisstation so anzugeben, daß der Aufwand für die in großer Anzahl vorhandenen Basisstationen gering wird. Dazu wird eine mit der Nebenstellenanlage mikroprozessorgesteuerte Schnittstelle unter Einhaltung des DECT-Standards angegeben, die die Mehrzahl der Funktionen von den Basisstationen in die Nebenstelle verlagert. Durch Mehrfachausnutzung von Baugruppen und dynamische Kanalzuordnung wird eine besonders kostengünstige Lösung erreicht.

## Beschreibung

Die Erfindung betrifft eine Schnittstellenanordnung für den Anschluß von Basisstationen an eine Nebenstellenanlage, zu der drahtgebundene und/oder schnurlose Endgeräte Zugriff haben können. Für den Entwurf derartiger Systeme, bei denen schnurlose Endgeräte über Basisstationen mit der Nebenstellenanlage kommunizieren können, ist von dem European Telecommunication Standard Institut, ETSI, ein Digital European Cordless Telecommunication Standard, DECT-Standard, entwickelt worden. Dieser DECT-Standard ist Grundlage für Bürokommunikationsnetze, hauptsächlich für die Sprachkommunikation, aber auch zur Unterstützung von Anforderungen des Datenverkehrs. DECT ist ein Funkzugriffsverfahren für feste Netze, das in Bereichen hoher Verkehrsdichte die Mobilkommunikation erlaubt.

Allgemein bekannt ist es, die Basisstationen über ein Vermittlungssubsystem oder eine Steuereinheit für das Funknetz mit der Nebenstellenanlage zu verbinden. Eine solche Lösung hat zwar den Vorteil, daß der mobile Teil des Systems an bestehende Nebenstellenanlagen nachgerüstet werden kann und aus der Sicht der Nebenstellenanlage wie eine Anzahl von Teilnehmern wirkt, die über analoge oder digitale Leitungsschnittstellen mit der Nebenstellenanlage verbunden sind. Nachteilig ist jedoch der beträchtliche schaltungstechnische Aufwand. Dieser Nachteil wird besonders in Gebieten mit großer Verkehrsdichte, wie beispielsweise in einem Büro wirksam, wo eine große Anzahl von Basisstationen eingesetzt wird, von denen jeweils eine Basisstation eine einzelne Zelle in einer Umgebung mit flächenmäßig sehr kleinen Zellen bedient. So entstand der Wunsch, für den speziellen Anwendungsbereich in einer Büroumgebung eine sowohl für schnurlose als auch für drahtgebundene Endgeräte einsetzbare kostengünstige Nebenstellenanlage zu entwerfen. Derartige Anlagen werden als drahtlose Nebenstellenanlagen WPABX, Wireless Privat Area Branch Exchange, bezeichnet.

Aufgabe der Erfindung ist es, unter Einhaltung des DECT-Standards eine Schnittstellenanordnung zwischen Nebenstellenanlage und Basisstation anzugeben, die die Realisierung einer Basisstation mit geringem Aufwand ermöglicht.

Diese Aufgabe wird durch die im ersten Anspruch genannten Merkmale gelöst.

Die Schnittstellenanordnung, kurz DECT-Schnittstelle genannt, ist integraler Bestandteil der drahtlosen Nebenstellenanlage und ist mit dieser über eine spezielle Nebenstellenanlagen-Systemschnittstelle verbunden. Durch Konzentration der Funktionalitäten der DECT-Schnittstelle und der Basisstationen in der DECT-Schnittstelle und multivalenter Nutzung mehrerer Baugruppen der DECT-Schnittstellenschaltung und der Nebenstellenanlage wird der Aufbau der in großer Anzahl vorhandenen Basisstationen besonders einfach und damit kostenoptimal. Insbesondere bei Fernspeisung ist der geringe Leistungsbedarf der Basisstationen von Vorteil.

Die Erfindung wird nachstehend an einem Ausführungsbeispiel erläutert. In der dazugehörigen Zeichnung zeigen
- Fig. 1: eine Konfiguration einer drahtlosen Nebenstellenanlage und
- Fig. 2: ein Blockschaltbild der Schnittstellenanordnung.

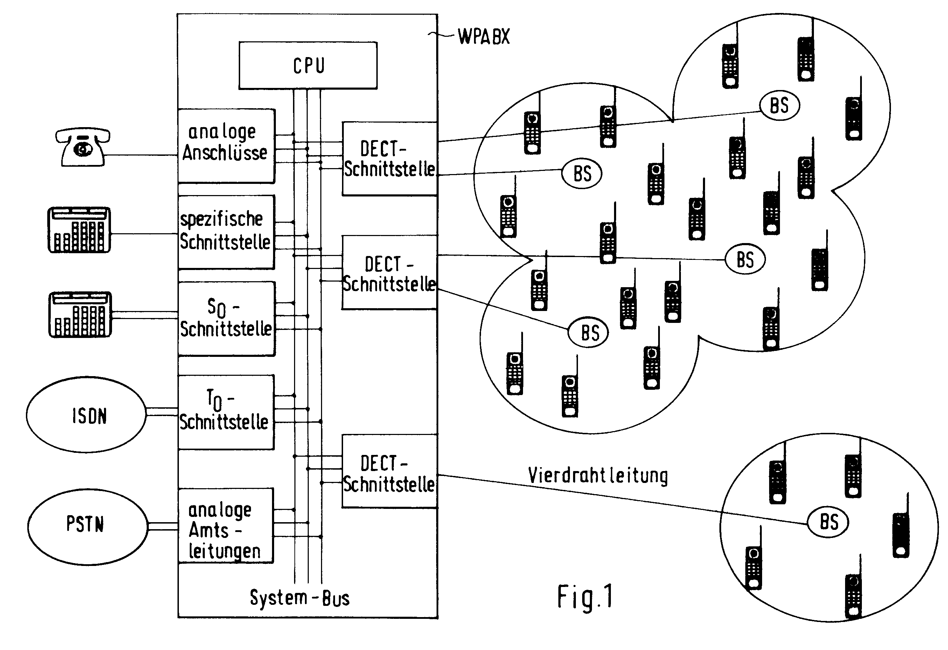

Gemäß Fig. 1 besteht eine drahtlose Nebenstellenanlage WPABX im wesentlichen aus einer Zentraleinheit CPU, die über einen Systembus unterschiedliche Schnittstellen verwaltet. Die drahtlose Nebenstellenanlage WPABX ist als eigenständige Anlage zum Anschluß drahtgebundener und/oder schnurloser Endgeräte einsetzbar. Es ist aber auch möglich, die Anlage an bestehende Netze anzuschließen. Über die Schnittstelle für analoge Amtsleitungen ist der Anschluß an ein öffentliches Fernsprechnetz PSTN, Public Switched Telephone Network, möglich, über die T₀-Schnittstelle kann der Anschluß an ein diensteintegrierendes digitales Netz, ISDN, vorgenommen werden.

An die DECT-Schnittstellen sind die Basisstationen BS über eine Vierdrahtleitung angeschlossen. Jede Basisstation BS versorgt jeweils eine Funkzelle und stellt in dieser die Funkverbindung für schnurlose Telefone bereit. Jede Basisstation BS besteht aus einem Sender/Empfänger und einem Übertragungsschaltkreis, der mit der DECT-Schnittstelle verbunden ist. Über die Leitungen der Übertragungsschnittstelle wird die Basisstation gesteuert, synchronisiert und ferngespeist.

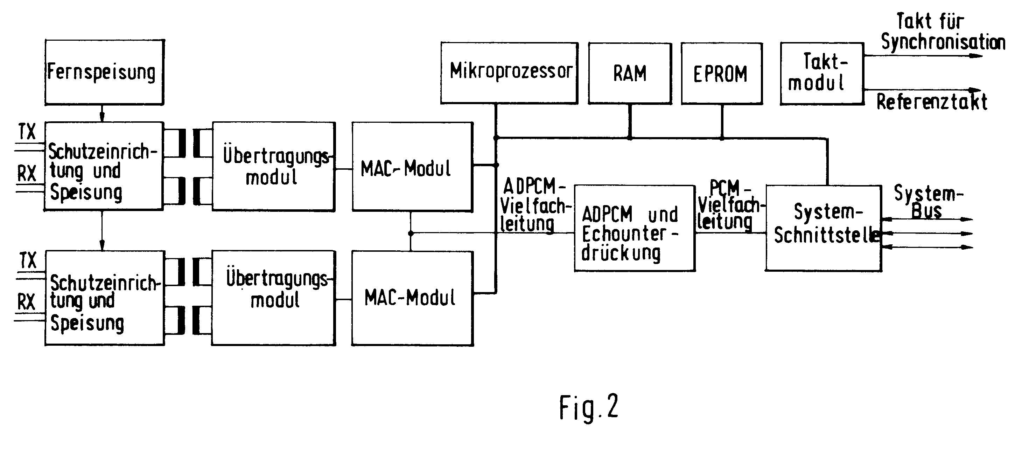

In Fig. 2 ist die erfindungsgemäße Schnittstellenanordnung dargestellt. In dem vorliegenden Beispiel werden zwei Basisstationen an die Schnittstellenanordnung angeschlossen. Die Schnittstellenanordnung enthält je Basisstation BS eine Leitungsschnittstelle für die Verbindung von drahtloser Nebenstellenanlage WPABX und Basisstation BS, einen Übertragungsmodul und einen Medium Access Control Modul, MAC-Modul, sowie gemeinsam für die angeschlossenen Basisstationen BS einen Mikroprozessor mit zugehörigen Speichern, einen Modul für ADPCM und Echounterdrückung, eine Systemschnittstelle und einen Taktmodul.

Bevor Anrufe getätigt oder entgegengenommen werden können, muß das schnurlose Telefon Informationen über die Umgebung bekommen, in der es betrieben wird, damit entschieden werden kann, ob der Zugang zum System möglich ist. Damit sich die schnurlosen Telefone auf die drahtlose Nebenstellenanlage WPABX synchronisieren können, ist in der Basisstation BS immer ein Funkkanal aktiv, auf dem Systeminformationen und die Identifikation der Basisstation BS ausgesendet werden. Hierdurch kann jedes schnurlose Telefon erkennen, in welchem Versorgungsbereich es gerade arbeitet. Im Ruhezustand meldet sich das schnurlose Telefon bei der Basisstation BS mit der größten Feldstärke an. Nach dem Anmelden in der drahtlosen Nebenstellenanlage WPABX wird entschieden, welcher Kanal für die anstehende Kommunikationsverbindung am besten geeignet ist. Im allgemeinen wird dies der Kanal mit den geringsten Störungen sein. Bei Standortveränderungen des Teilnehmers innerhalb einer von der Basisstation versorgten Zelle oder beim Übergang von einer Zelle in eine andere ist ein schneller und unterbrechungsfreier Kanalwechsel erforderlich. Diese Forderung wird durch einen Vielfachzugriff im Zeitmultiplexverfahren und eine dynamische Kanalauswahl erfüllt. Ein Kanalwechsel erfolgt, wenn eine andere Basisstation BS im gleichen Zellenbündel ein stärkeres Signal sendet als die aktuelle Station oder wenn innerhalb derselben Zelle ein anderer Kanal geeigneter erscheint.

Der MAC-Modul führt im wesentlichen die Funktionen aus, die in der zweiten der vier im DECT-Standard angegebenen Protokollschichten definiert sind. Dazu gehört die Auswahl der physikalischen Kanäle und der Aufbau und Abbau der Verbindungen auf diesen Kanälen.

Physikalische Kanäle entstehen aus der Zusammenlegung von Zeitschlitzen und den mit der Datenrate moduliertem Träger, der aus einem Spektrum von zehn Trägerfrequenzen ausgewählt wird.

Jede einem MAC-Modul zugeordnete Basisstation besteht aus einem Sender/Empfänger, der jede der im DECT-Standard festgelegten zehn Trägerfrequenzen verwenden kann, so daß der Betrieb auf allen 12 Duplex-Zeitschlitzen, die in einem 10ms-Rahmen festgelegt sind, möglich ist, wobei jeder Zeitschlitz unabhängig auf einer beliebigen der zehn Trägerfrequenzen arbeiten kann.

Grundsätzlich sind zwölf Zeitschlitze für die Übertragungsrichtung von der Basisstation BS zum Handapparat und die gleiche Anzahl für die entgegengesetzte Übertragungsrichtung vorgesehen. Es ist aber auch möglich, eine unsymmetrische Zuordnung vorzunehmen, wenn beispielsweise in einer Richtung Daten und in der anderen Richtung nur Quittungssignale übertragen werden.

Jeweils zwei MAC-Module werden von einem Mikroprozessor so verwaltet, daß die Anzahl der Kanäle je Basisstation je nach Bedarf der aus einer Zelle angeforderten Kanäle durch sogenannte dynamische Zuordnung der Kanäle angepaßt wird. Der Modul für die Umwandlung von Adaptiver Differenz-Pulscodemodulation in Pulscodemodulation und die Beseitigung des Nah- und Fernechos ist ebenfalls für zwei MAC-Module vorgesehen.

Die Leistungsfähigkeit der Übertragungsschnittstelle zwischen Schnittstellenanordnung und Basisstation wird durch einen anwendungsspezifischen Schaltkreis ASIC, Application-Specific Integrated Circuit, mittels Zeitsteuerungssignalen und Fehlerbehandlung überwacht.

Die Schnittstellenanordnung enthält einen Taktmodul, der einen hochgenauen Referenztakt generiert, auf den der Systemtakt synchronisiert wird, falls keine externe Synchronisierung, beispielsweise von einem ISDN, erfolgt. Der Systemtakt wird vom Taktmodul dazu verwendet, alle Schnittstellenanordnungen rahmen- und multirahmensynchron zu halten. Der Referenztakt des Taktmoduls wird jedoch nicht wirksam, wenn die Synchronisierung von einem externen Takt, der beispielsweise von einem ISDN geliefert wird, vorgenommen wird.

## Patentansprüche

1. Schnittstellenanordnung für den Anschluß von Basisstationen (BS) an eine Nebenstellenanlage (WPABX), zu der schnurlose Endgeräte über eine Funkschnittstelle und Basisstationen (BS) Zugriff haben, **dadurch gekennzeichnet,** daß mindestens eine Basisstation (BS) einer Schnittstellenanordnung zugeordnet ist, wobei jede Basisstation (BS) über eine Leitungsschnittstelle mit einem Medium Access Control-Modul, kurz MAC-Modul, verbunden ist, und ein Mikroprozessor mit zugehörigen Speichern (RAM, EPROM) mindestens einem MAC-Modul zugeordnet ist und daß die MAC-Module gemeinsam über ein Modul für die Umwandlung von Adaptiver Differenz-Pulscodemodulation in Pulscodemodulation und für die Echounterdrückung mit einer Systemschnittstellenschaltung, die über einen Systembus an die Zentraleinheit (CPU) der Nebenstellenanlage (WPABX) angeschlossen ist, verbunden sind.

2. Schnittstellenanordnung nach Anspruch 1, dadurch gekennzeichnet, daß die Basisstation (BS) über eine Vierdrahtleitung mit einem Modul, der eine Schutzeinrichtung und einer Speiseschaltung enthält, verbunden ist und dieser galvanisch getrennt über einen Übertragungsmodul an den MAC-Modul geschaltet ist.

3. Schnittstellenanordnung nach Anspruch 1, dadurch gekennzeichnet, daß von dem MAC-Modul die physikalischen Kanäle zwischen schnurlosem Endgerät und Basisstation ausgewählt werden und auf diesen Kanälen die Verbindungen aufgebaut und abgebaut werden und das Multiplexen und Demultiplexen der Steuerinformationen mit Informationen aus höheren Protokollschichten und Fehlerinformationen durchgeführt wird und daß der nahtlose Kanalwechsel innerhalb einer von einer Basisstation (BS) bedienten Zelle oder beim Übergang von einer Zelle zu einer anderen Zelle von dem jeweils der Basisstation (BS) zugeordneten MAC-Modul verwaltet wird.

4. Schnittstellenanordnung nach Anspruch 1, dadurch gekennzeichnet, daß von einem MAC-Modul, dem sogenannten Master-MAC-Modul, alle weiteren MAC-Module der Schnittstellenanordnung synchronisiert werden.

5. Schnittstellenanordnung nach Anspruch 1, dadurch gekennzeichnet, daß die bei der Sprachübertragung verhandenen Module für die Umwandlung von Adaptiver Differenz-Pulscodemodulation in Pulscodemodulation und für die Echounterdrückung bei Datenübertragung entfallen.
